# EUROPEAN PATENT SPECIFICATION

(11) **EP 1 814 947 B1**
(45) Date of publication and mention of the grant of the patent: **30.12.2009**
(21) Application number: 05804957.8
(22) Date of filing: 02.11.2005
(51) Int. Cl.: C08L 63/00

(54) **AMPHIPHILIC BLOCK COPOLYMER-TOUGHENED EPOXY RESINS**
MIT AMPHIPHILEM BLOCKCOPLYMER GEHÄRTETE EPOXIDHARZE
RÉSINES D' ÉPOXY DURCIES PAR COPOLYMÈRE BLOC AMPHIPHILE

(30) Priority: 10.11.2004 US 626607 P; 02.08.2005 US 704760 P
(43) Date of publication of application: 08.08.2007
(73) Proprietor: DOW GLOBAL TECHNOLOGIES INC., Midland MI 48674 (US); The Regents of the University of Minnesota, Minneapolis, Minnesota 55455 (US)
(72) Inventor: BATES, Frank, S., St. Louis Park, MN 55416 (US); HAHN, Stephen, F., Lake Jackson, TX 77566 (US)
(74) Representative: Raynor, John
(86) International application number: PCT/US2005/039965
(87) International publication number: WO 2006/052729

(56) References cited:
- WO-A-96/11238
- US-A- 5 140 069
- US-A1- 2004 034 124
- JUNXIAN WU, YONATHAN S THIO, FRANK S. BATES: "Structure and Properties of PBO?PEO Diblock Copolymer Modified Epoxy" JOURNAL OF POLYMER SCIENCE: PART B: POLYMER CHEMISTRY, vol. 43, 2005, pages 1950-1965, XP002367969

## Description

The present invention relates to epoxy resins modified with block copolymers. More particularly, the present invention relates to epoxy resins modified with amphiphilic polyether block copolymers to increase the fracture resistance or toughness of the cured epoxy resin.

Epoxy resins are typically cured with hardeners or curing agents, and when cured, the resins are known for their thermal and chemical resistance. The cured epoxy resins also display good mechanical properties but they lack toughness and tend to be very brittle upon cure. The lack of toughness of the resins is especially true as the crosslink density or Tg of the resins increases.

Epoxy resins have been studied extensively specifically to improve their chemical and thermal properties including toughness. Heretofore, rubber particulates of various compositions and sizes have been added to epoxy resins in an attempt to improve the toughness of the cured epoxy. Primarily, attempts to toughen epoxy compounds have focused on employing liquid rubbers, such as carboxyl-terminated butadiene-acrylonitrile copolymers. However, the rubber must first be prereacted with the epoxy resin to ensure compatibility, and optimum cure properties.

Recently, there have been several studies related to increasing the fracture resistance or toughness of epoxy resins by adding to the epoxy resin various block copolymers. Much of the previous work is focused on the use of amphiphilic diblock copolymers having an epoxy miscible block and an epoxy immiscible block in which the epoxy miscible block is poly(ethylene oxide) (PEO) and the immiscible block is a saturated polymeric hydrocarbon. Although effective at providing templated epoxies with appealing property sets, the known block copolymer materials are too expensive to be used in some applications.

For example, Journal of Polymer Science, Part B: Polymer Physics, 2001, 39(23), 2996-3010 discloses that the use of a poly(ethylene oxide)-b-poly(ethylene-alt-propylene) (PEO-PEP) diblock copolymer provides micellar structures in cured epoxy systems; and that block copolymers self-assembled into vesicles and spherical micelles can significantly increase the fracture resistance of model bisphenol A epoxies cured with a tetrafunctional aromatic amine curing agent. And, Journal of The American Chemical Society, 1997, 119(11), 2749-2750 describes epoxy systems with self-assembled microstructures brought using amphiphilic PEO-PEP and poly(ethylene oxide)-b-poly(ethyl ethylene) (PEO-PEE) diblock copolymers. These block copolymer containing-systems illustrate characteristics of self-assembly.

Other block copolymers incorporating an epoxy-reactive functionality in one block have been used as modifiers for epoxy resins to achieve nanostructured epoxy thermosets. For example, Macromolecules, 2000, 33(26) 9522-9534 describes the use of poly(epoxyisoprene)-b-polybutadiene (BIxn) and poly(methylacrylate-co-glycidyl methacrylate)-b-polyisoprene (MG-I) diblock copolymers that are amphiphilic in nature and are designed in such a way that one of the blocks can react into the epoxy matrix when the resin is cured. Also, Journal of Applied Polymer Science, 1994, 54, 815 describes epoxy systems having submicron scale dispersions of poly(caprolactone)-b-poly(dimethylsiloxane)-b-poly(caprolactone) triblock copolymers.

While some of the previously known diblock and triblock copolymers mentioned above are useful for improving the toughness of epoxy resins, the preparation of such previously known block copolymers is complicated. The previously known block copolymers require multiple steps to synthesize and therefore are less economically attractive from a commercial standpoint.

Still other self-assembled amphiphilic block copolymers for modifying thermosetting epoxy resins to form nanostructured epoxy thermosets are known. For example, Macromolecules 2000, 33, 5235-5244 and Macromolecules, 2002, 35, 3133-3144, describe the addition of a poly(ethylene oxide)-b-poly(propylene oxide) (PEO-PPO) diblock and a poly(ethylene oxide)-b-poly(propylene oxide)-b-poly(ethylene oxide) (PEO-PPO-PEO) triblock to an epoxy cured with methylene dianiline, where the average size of the dispersed phase in the diblock-containing blends is of the order of 10-30 nm. And, a polyether block copolymer such as a PEO-PPO-PEO triblock is also known to be used with an epoxy resin as disclosed in Japanese Patent Application Publication No. H9-324110.

While some of the previously known diblock and triblock copolymers mentioned above are useful for improving the toughness of epoxy resins, there is still a need to further enhance the toughness of the epoxy resin used in certain applications while maintaining all other crucial properties of the resin.

It is therefore desired to provide an alternative block copolymer that is useful for improving the toughness of thermosetting epoxy resins by a self assembly process without any of the disadvantages of the previously known block copolymers.

The present invention is directed to a curable epoxy resin composition comprising
(a) an epoxy resin; and
(b) an amphiphilic block copolymer containing at least one epoxy resin miscible block segment and at least one epoxy resin immiscible block segment; wherein the immiscible block segment comprises at least one polyether structure provided that the polyether structure of said immiscible block segment contains at least one or more alkylene oxide monomer units having at least four carbon atoms; such that when the epoxy resin composition is cured, the toughness of the resulting cured epoxy resin composition is increased.

One embodiment of the present invention is directed to an epoxy resin modified with an amphiphilic polyether block copolymer containing at least one epoxy resin miscible block segment and at least one epoxy resin immiscible block segment; wherein both the miscible block segment and the immiscible block segment comprises at least one polyether structure.

Some of the beneficial features of using the amphiphilic polyether block copolymer of the present invention to toughen epoxy resins include, for example: (1) the self assembly characteristics of the amphiphilic block copolymer, (2) the ability of the block copolymer to assemble at a nanometer length scale, (3) the ability of the block copolymer to create a very uniform dispersion across the entire resin monomer matrix, and (4) the ability to use low loading levels of the block copolymer toughening agent to achieve toughening results.

Some of the advantages of using the amphiphilic polyether block copolymer of the present invention include, for example: (1) the ability of the block copolymer to improve toughness of the host resin without adversely affecting other key properties of the host resin such as glass transition temperature, modulus and viscosity; (2) the ability of the resin to retain certain aesthetic qualities such as appearance that is crucial in certain applications; and (3) with the appropriately designed copolymer structure, the ability to consistently and reproducibly create morphology prior to or during the curing of the resin itself.

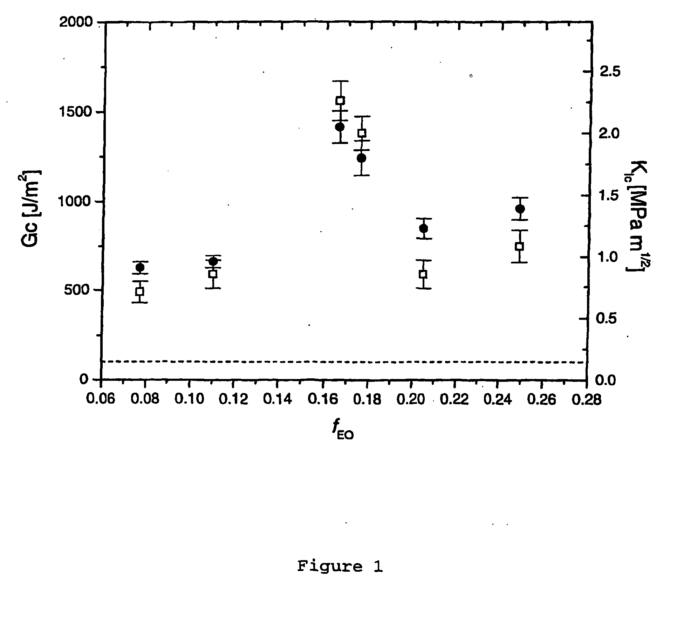

Figure 1 is a graphical illustration showing the strain energy release rate (G_{c}) (open squares) and critical stress intensity factor (K_{1c}) (solid circles) of D.E.R.* 383 epoxy resins cured with phenol novolac (Durite SD 1731) with 5 weight percent poly(ethylene oxide)-b- poly(butylene oxide)(PEO-PBO) diblock with various volume fractions of ethylene oxide (EO) in the diblock. The dashed line shown in Figure 1 represents the (G_{1c}) of a phenol novolac cured epoxy with no block copolymer additive.

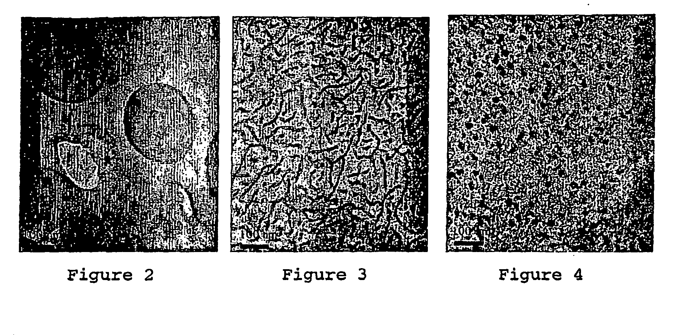

Figure 2 is a transmission electron microscopy (TEM) image of self assembled vesicular micelles in a cured D.E.R.* 383/phenolic novolac (Durite SD 1731) epoxy formulation prepared by curing the epoxy with a PEO-PBO diblock corresponding to volume fraction f_{EO} 0.11 in Figure 1.
Figure 3 is a TEM image of self assembled wormlike micelles in a cured D.E.R.* 383/phenolic novolac (Durite SD 1731) epoxy formulation prepared by curing the epoxy with a PEO-PBO diblock corresponding to volume fraction f_{EO} 0.18 in Figure 1.
Figure 4 is a TEM image of self assembled spherical micelles in a cured D.E.R.* 383/phenolic novolac (Durite SD 1731) epoxy formulation prepared by curing the epoxy with a PEO-PBO diblock corresponding to volume fraction f_{EO} 0.25 in Figure 1.

The present invention includes a composition with improved toughness comprising an epoxy resin monomer system modified with an amphiphilic block copolymer, such as a polyether block copolymer, as a toughening agent for the resin system. These modified epoxy resins, when cured, show impressive improvements in fracture toughness (defined by K_{1c}) with only minor changes in modulus and glass transition temperature (Tg) behavior.

Templated thermoset epoxy polymers with nanoscale self-assembled morphologies, exhibit an attractive combination of improved toughness and retention of material properties such as modulus and Tg. The epoxy thermoset polymers can be prepared, for example, by dispersing an amphiphilic block copolymer in an epoxy resin monomer matrix, where the copolymer can undergo self-assembly, and then curing the resin. Self-assembled resins that exhibit surfactant-like morphologies provide enhanced fracture toughness at very low (for example, from 1 to 5 weight percent) block copolymer loadings. Amphiphilic block copolymers that are capable of self assembly when mixed with the resin monomer must have at least one block that is miscible with the resin/curing agent mixture prior to cure, and at least one block that is immiscible with the resin/curing agent mixture prior to cure.

One embodiment of the present invention is aimed at preparing an all amphiphilic polyether block copolymer, for example, a diblock copolymer, such as those based on poly(ethylene oxide)-b-(butylene oxide) (PEO-PBO), that self assembles in epoxy resin systems. At sufficiently high butylene oxide block lengths (for example, Mn=1000 or greater) these block structures are found to be effective at templating the epoxy resin monomer into micellar structures such as spherical micelles.

The amphiphilic polyether block copolymer useful in the present invention includes one or more polyether block copolymers comprising at least one epoxy miscible polyether block segment derived from an alkylene oxide such as ethylene oxide (EO) and at least one epoxy immiscible polyether block segment derived from an alkylene oxide with at least greater than 3 carbon atoms, for example 1,2-epoxy butane known commonly as butylene oxide (BO). The immiscible block segment may also be comprised of mixtures of C₄ or higher carbon analogue monomers that are copolymerized together to provide the immiscible block segment. The use of a C4 or higher alkylene oxide in the resin immiscible block segment advantageously provides as good or better performance than a corresponding C3 alkylene oxide-based analog. The immiscible block may also contain lower molecular weight co-monomers such as EO. The polyether block copolymer contains at least one epoxy resin miscible polyether block segment, E, and at least one epoxy resin immiscible polyether block segment, M.

The present invention polyether block copolymer component may contain at least two or more amphiphilic polyether block copolymer segments. Examples of the amphiphilic polyether block copolymer may be selected from the group consisting of a diblock (EM); a linear triblock (EME or MEM); a linear tetrablock (EMEM); a higher order multiblock structure (EMEM)ₓE or (MEME)ₓM, where X is an integer value ranging from 1-3; a branched block structure; or a star block structure; and any combination thereof. The amphiphilic polyether block copolymer consisting of the branched block structures or star block structures contains at least one epoxy monomer miscible block and at least one epoxy monomer immiscible block.

Examples of the epoxy resin miscible polyether block segment, E, include a polyethylene oxide block, a propylene oxide block, a poly(ethylene oxide-co-propylene oxide) block, a poly(ethylene oxide-ran-propylene oxide) block, and mixtures thereof. Preferably, the epoxy resin miscible polyether block segment useful in the present invention is a polyethylene oxide block.

Generally, the epoxy resin immiscible polyether block segment, M, useful in the present invention is an epoxidized alpha olefin having carbon atoms of from C₄ to C_{20.} Examples of the epoxy resin immiscible polyether block segment, M, include a polybutylene oxide block, a polyhexylene oxide block derived from 1,2 epoxy hexane, a polydodecylene oxide block derived from 1,2-epoxy dodecane, and mixtures thereof. Preferably, the epoxy resin immiscible polyether block segment useful in the present invention is a polybutylene oxide block.

In another embodiment of the present invention, when the polyether block copolymer has a multiblock copolymer structure, other block segments in addition to E and M may be present in the block copolymer. Examples of other miscible segments of the block copolymer include polyethylene oxide, polymethyl acrylate, and mixtures thereof. Examples of other immiscible segments of the block copolymer include polyethylene propylene (PEP), polybutadiene, polyisoprene, polydimethyl siloxane, polybutylene oxide, polyhexylene oxide, polyalkyl methyl methacrylate, such as polyethyl hexyl methacrylate, and mixtures thereof.

The amphiphilic polyether block copolymers which can be employed in the practice of the present invention include for example, but are not limited to, a diblock copolymer, a linear triblock, a linear tetrablock, a higher order multiblock structure, a branched block structure, or star block structure. For example, the polyether block copolymer may contain a poly(ethylene oxide) block, a poly(propylene oxide) block or a poly(ethylene oxide-co-propylene oxide) block; and an alkylene oxide block based on a C₄ or higher carbon analog block, such as, for example, 1,2-epoxybutane, 1,2-epoxyhexane, 1,2-epoxydodecane,or 1,2-epoxyhexadecane block. Other examples of the alkylene oxide blocks may include Vikolox^{™} epoxidized alpha olefins, including C10-C30+ olefins, commercially available from Arkema.

Preferred examples of suitable block copolymers useful in the present invention include amphiphilic polyether diblock copolymers such as, for example, poly(ethylene oxide)-b-poly(butylene oxide)(PEO-PBO) or amphiphilic polyether triblock copolymers such as, for example, poly(ethylene oxide)-b-poly(butylene oxide)-b-poly(ethylene oxide) (PEO-PBO-PEO).

The amphiphilic polyether block copolymer used in the present invention can have a number average molecular weight (Mn) of from 1,000 to 30,000, for the combination of both block lengths. Preferably, the molecular weight of the polyether block copolymer is between 2,000 and 20,000 and more preferably between 3,000 to 20,000. Prior art materials derived from block copolymers in which the immiscible block has a very low solubility parameter (polymeric hydrocarbons) microphase separate prior to cure. The polyether containing block structures of the present invention, on the other hand, can either be microphase separated prior to cure at the preferred molecular weights, or form micelles while the curing process is being performed.

The composition of the block copolymer can range from 90 percent epoxy resin miscible polyalkylene oxide block and 10 percent epoxy resin immiscible polyalkylene oxide block to 10 percent epoxy resin miscible polyalkylene oxide block and 90 percent epoxy resin immiscible polyalkylene oxide block.

Small amounts of homopolymers from each of the respective block segments may be present in the final amphiphilic polyether block copolymer of the present invention. For example, from 1 weight percent to 50 weight percent, preferably from 1 weight percent to 10 weight percent, of a homopolymer that is similar or identical in structure with the miscible or the immiscible block can be added to the composition of the present invention comprising an epoxy monomer system and an amphiphilic polyether block copolymer without adversely affecting the performance of the block copolymer. Furthermore, homopolymers (or other additives) that are miscible in the epoxy immiscible component of the phase separated block copolymer can be added in larger amounts (for example greater than 50 weight percent) to actually improve the performance of the thermoset. For example, a weight ratio from 0.5 to 4.0 of such homopolymer or other additive to block copolymer, preferably a weight ratio of from 1.0 to 2.0 can be used to improve toughness of the thermoset.

The amount of amphiphilic polyether block copolymers employed in the epoxy resin composition of the present invention depends on a variety of factors including the equivalent weight of the polymers, as well as the desired properties of the products made from the composition. In general, the amount of amphiphilic polyether block copolymers employed in the present invention may be from 0.1 weight percent to 30 weight percent, preferably from 0.5 weight percent to 10 weight percent and, most preferably, from 1 weight percent to 5 weight percent, based on the weight of the resin composition.

The amphiphilic polyether block copolymers of the present invention preferably increase the toughness or fracture resistance of the epoxy resin, preferably at low loadings (for example, less than 5 weight percent) of block copolymer in the epoxy resin composition. Generally, addition of from 1 wt percent to 5 wt percent of a polyether block copolymer to the epoxy resin composition increases the toughness of the resin composition by a factor of 1.5 times to 2.5 times that of a control.

The present invention epoxy resin composition may contain at least one or more amphiphilic polyether block copolymers mixed with the epoxy resin. In addition, two or more different amphiphilic block copolymers may be blended together to make up the block copolymer component of the present invention so long as one of the block copolymers is a polyether block copolymer. More than one block copolymer can be combined to gain additional control of the nanostructure, that is, shape and dimension.

In addition to the polyether block copolymer used in the resin composition, other amphiphilic block copolymers may be used as a secondary block copolymer component in the resin composition of the present invention. Examples of additional amphiphilic block copolymers, other than the polyether block copolymers of the present invention, which can be employed in the practice of the present invention include for example, but are not limited to, poly(ethylene oxide)-*b*-poly(ethylene-*alt* propylene) (PEO-PEP), poly(isoprene-ethylene oxide) block copolymers (PI-b-PEO), poly(ethylene propylene-b-ethylene oxide) block copolymers (PEP-b-PEO), poly(butadiene-b-ethylene oxide) block copolymers (PB-b-PEO), poly(isoprene-b-ethylene oxide-b-isoprene) block copolymers (PI-b-PEO-PI), poly(isoprene-b-ethylene oxide-b-methylmethacrylate) block copolymers (PI-b-PEO-b-PMMA); and mixtures thereof. Generally, the amount of secondary amphiphilic block copolymer used in the resin composition may be from 0.1 weight percent to 30 weight percent.

The polyether block copolymers of the present invention provide uniformly dispersed and uniformly scaled nano-sized structures which preferably form (template) in the liquid resin matrix due to micellization brought by the balance of immiscibility of one block segment and miscibility of the other block segment. The micellar structures are preserved into the cured epoxy thermoset, or form during the curing process, producing epoxy thermoset materials exhibiting improved toughness, improved fracture resistance, and improved impact resistance while maintaining Tg, modulus and other properties at the same level as the unmodified epoxy thermoset. The micellar morphology of the nano-templated resin can be for example, spherical, worm-like, and vesicles. Micellar morphologies are advantageously obtained at low (for example, less than 5 wt percent) concentrations of block copolymers; that is, the morphological features are not associated with one another or packed into a three dimensional lattice. At higher concentrations self-assembled structures can form spherical, cylindrical, or lamellar morphological features that are associated with one another by lattice interactions, also at a nanometer size scale.

It is believed that the increase in fracture resistance occurs when the block copolymers self-assemble into a nanoscale morphology such as worm-like, vesicle or spherical micelle morphology. While it is not well understood how to predict which micelle morphology, if any, will occur in different resins, it is believed that some of the factors that determine the self-assembled morphology may include, for example, (i) the choice of monomers in the block copolymer, (ii) the degree of asymmetry in the block copolymer, (iii) the molecular weight of block copolymer, (iv) the composition of the epoxy resin, and (v) the choice of curing agent for the resin. Apparently, a nanoscale morphology plays an important role in creating toughness in an epoxy resin product of the present invention.

As an illustration of one embodiment of the present invention, an epoxy resin may be blended with a polyether block copolymer, for example, a poly(ethylene oxide)-b-poly(butylene oxide) (PEO-PBO) diblock copolymer wherein the PBO is the epoxy immiscible hydrophobic soft component of the diblock copolymer and the PEO is the epoxy miscible component of the diblock copolymer. The curable epoxy resin composition including the PEO-PBO diblock copolymer increases the impact resistance of the cured epoxy resin body.

The PEO-PBO diblock copolymer can be indicated generally by the chemical formula (PEO)ₓ-(PBO)_{y} wherein the subscripts x and y are the number of monomer units of polyethylene oxide and polybutylene oxide in each block, respectively and are positive numbers. Generally, x should be from 15 to 85 and the molecular weight of the structural part (PEO)ₓ should be from 750 to 100,000. Subscript y should be from 15 to 85 and the molecular weight represented by the structural part (PBO)_{y} should be from 1,000 to 30,000. Also, a single PEO-PBO diblock copolymer may be used alone, or more than one PEO-PBO diblock copolymer may be combined to be used as well.

In one embodiment of the present invention, a PEO-PBO diblock copolymer is used wherein the diblock copolymer has 20 percent PEO and 80 percent PBO to 80 percent PEO and 20 percent PBO; and has block sizes of molecular weights (Mn) of PBO 2000 or higher and molecular weights of PEO 750 or higher; and provides various self assembled morphologies. For example, the present invention includes a diblock with a PBO block length of from 2,500 to 3,900 that provides spherical micelles. Another example of the present invention includes a diblock with a PBO segment of 6,400 that provides worm-like micelles. Still another example of the present invention is a diblock with a short (Mn=750) PEO block segment that provides an agglomerated vesicle morphology.

Yet another example of the present invention includes a mixture of a PEO-PBO diblock with a low molecular weight PBO homopolymer that provides a spherical micelle in which the PBO homopolymer sequesters into the micelle without forming a separate macrophase; the PBO homopolymer macrophase separates when added without the diblock present.

Then still another illustration of the present invention is the blending of a polyhexylene oxide (PHO) homopolymer with an amphillic diblock copolymer poly(hexylene oxide) - poly(ethylene oxide) (PHO-PEO). The PHO-PEO diblock self assembles to form spherical micelles in an epoxy resin such as bisphenol-A epoxy resin cured with a hardener. The size of the spherical micelles of the diblock may be increased for example from 20 to 30 nm to 0.5 to 10 microns by modifying the diblock with a PHO homopolymer. The fracture toughness of an epoxy resin can be controlled by changing or varying the size of the spherical micelles of the diblock copolymer.

Yet another example of the present invention includes a combination of amphiphilic polyether block copolymers and additives miscible in the epoxy immiscible component of the amphiphilic block copolymers in order to increase the fracture resistance or toughness of the cured epoxy resin using less of the amphiphilic polyether block copolymer than would otherwise be needed. Such additives may include, for example, squalane, dodecane or polytetrahydrofuran.

In general, the amphiphilic polyether block copolymers used in the present invention can be prepared in a single sequential synthetic polymerization process, wherein one monomer is polymerized to prepare an initial block, followed by simple introduction of the second monomer type which is then polymerized onto the terminus of the first block copolymer until the polymerization process is complete. It is also possible to make the blocks separately, preparing the first block and then polymerizing the second block onto the terminus of the first block in a second synthetic step. The difference in solubility of the two block fragments is sufficient that the block copolymer may be used to modify a variety of epoxy materials.

The block copolymers can be prepared by Group I metals such as sodium, potassium or cesium moderated anionic polymerization. The polymerization can be carried out neat or using a solvent. The temperature of the polymerization reaction can be for example from 70°C to 140 °C at atmospheric pressure to slightly above atmospheric pressure. The synthesis of the block copolymer may be carried out, for example, as described in Whitmarsh, R.H., In Nonionic Surfactants Polyoxyalkylene Block Copolymers; Nace, V.M., Ed.; Surfactant Science Series; Vol. 60; Marcel Dekker, N.Y., 1996; Chapter 1.

In a preferred embodiment, the block segments of the block copolymers are prepared by the ring opening polymerization of 1,2-epoxy alkenes.

A thermoset material is defined as being formed of polymer chains of variable length bonded to one another via covalent bonds, so as to form a three-dimensional network. Thermoset epoxy materials can be obtained, for example, by reaction of a thermosetting epoxy resin with a hardener such as of an amine type.

Epoxy resins useful in the present invention include a wide variety of epoxy compounds. Typically, the epoxy compounds are epoxy resins which are also referred to as polyepoxides. Polyepoxides useful herein can be monomeric (for example, the diglycidyl ether of bisphenol A, novolac-based epoxy resins, and tris-epoxy resins), higher molecular weight advanced resins (for example, the diglycidyl ether of bisphenol A advanced with bisphenol A) or polymerized unsaturated monoepoxides (for example, glycidyl acrylates, glycidyl methacrylate, allyl glycidyl ether, etc.), homopolymers or copolymers. Most desirably, epoxy compounds contain, on average, at least one pendant or terminal 1,2-epoxy group (that is, vicinal epoxy group) per molecule.

Examples of polyepoxides useful in the present invention include the polyglycidyl ethers of both polyhydric alcohols and polyhydric phenols; polyglycidyl amines; polyglycidyl amides; polyglycidyl imides; polyglycidyl hydantoins; polyglycidyl thioethers; epoxidized fatty acids or drying oils; epoxidized polyolefins; epoxidized di-unsaturated acid esters; epoxidized unsaturated polyesters; and mixtures thereof.

Numerous polyepoxides prepared from polyhydric phenols include those which are disclosed, for example, in U.S. Patent No. 4,431,782. Polyepoxides can be prepared from mono-, di- and tri-hydric phenols, and can include the novolac resins. Polyepoxides can include the epoxidized cyclo-olefins; as well as the polymeric polyepoxides which are polymers and copolymers of glycidyl acrylate, glycidyl methacrylate and allyl glycidyl ether. Suitable polyepoxides are disclosed in U.S. Patent Nos. 3,804,735; 3,892,819; 3,948,698; 4,014,771 and 4,119,609; and Lee and Neville, Handbook of Epoxy Resins, Chapter 2, McGraw Hill, N. Y. (1967).

While the present invention is applicable to polyepoxides in general, preferred polyepoxides are glycidyl polyethers of polyhydric alcohols or polyhydric phenols having an epoxide equivalent weight (EEW) of from 150 to 3,000, preferably an EEW of from 170 to 2,000. These polyepoxides are usually made by reacting at least two moles of an epihalohydrin or glycerol dihalohydrin with one mole of the polyhydric alcohol or polyhydric phenol, and a sufficient amount of a caustic alkali to combine with the halohydrin. The products are characterized by the presence of more than one epoxide group, that is, a 1,2-epoxy equivalency greater than one.

The polyepoxide useful in the present invention can also be a cycloaliphatic diene-derived epoxide. These polyepoxides can be cured either thermally, cationically or photoinitiation (example UV initiated cure). There are several cycloaliphatic epoxides that are made and marketed by The Dow Chemical Company such as 3,4-epoxycyclohexylmethyl-3,4-epoxycyclohexyl carboxylate; 1,2-epoxy-4-vinylcyclohexane; bis(7-oxabicyclo[4.1.0]hept-3-ylmethyl hexanedioic acid ester; 3,4-epoxycyclohexanecarboxylate methyl ester; and mixtures thereof.

The polyepoxide may also include a minor amount of a monoepoxide, such as butyl and higher aliphatic glycidyl ethers, phenyl glycidyl ether, or cresyl glycidyl ether, as a reactive diluent. Such reactive diluents are commonly added to polyepoxide formulations to reduce the working viscosity thereof, and to give better wetting to the formulation. As is known in the art, a monoepoxide affects the stoichiometry of the polyepoxide formulation and adjustments are made in the amount of curing agent and other parameters to reflect that change.

Generally, the amount of polyepoxide used in the present invention may range from 30 weight percent to 99 weight percent.

One optional component useful in the present invention may be a curing agent. The curing agent component (also referred to as a hardener or cross-linking agent) useful in the present invention may be any compound having an active group being reactive with the reactive epoxy group of the epoxy resin. The chemistry of such curing agents is described in the previously referenced books on epoxy resins. The curing agent useful in the present invention includes nitrogen-containing compounds such as amines and their derivatives; oxygen-containing compounds such as carboxylic acid terminated polyesters, anhydrides, phenol-formaldehyde resins, amino-formaldehyde resins, phenol, bisphenol A and cresol novolacs, phenolic-terminated epoxy resins; sulfur-containing compounds such as polysulfides, polymercaptans; and catalytic curing agents such tertiary amines, Lewis acids, Lewis bases and combinations of two or more of the above curing agents.

Practically, polyamines, dicyandiamide, diaminodiphenylsulfone and their isomers, aminobenzoates, various acid anhydrides, phenol-novolac resins and cresol-novolac resins, for example, may be used in the present invention, but the present invention is not restricted to the use of these compounds.

Generally, the amount of curing agent used in the present invention may be in the range from 1 weight percent to 70 weight percent.

Another optional component useful in the present invention is a curing catalyst. The curing catalyst may be added to the epoxy resin component or alternatively, the curing catalyst may be blended into the curable composition. Examples of curing catalyst include imidazole derivatives such as 2-ethyl-4-methyl imidazole; tertiary amines; organic metallic salts; and cationic photoinitiators, for example, diaryliodonium salts such as Irgacure^{™} 250 available from Ciba-Geigy or triarylsulfonium salts such as Cyracure* 6992 available from The Dow Chemical Company.

Generally, the curing catalyst is used in an amount of from 0 to 6 parts by weight based on the total weight of the curable composition.

The curable epoxy resin composition according to the present invention may also contain additives such as fillers, dyes, pigments, thixotropic agents, photo initiators, latent catalysts, inhibitors, solvents, surfactants, fluidity control agents, stabilizers, diluents that aid processing, adhesion promoters, flexibilizers, other toughening agents and fire retardants.

The amount of the optional additives used in the epoxy resin composition generally may be from 0 weight percent to 70 weight percent depending on the final formulation and end use application.

In the preparation of the toughened blend or composition of the present invention, the components are mixed together by known means in the art at conditions to form a curable composition, preferably in liquid form. The curable amphiphilic polyether block copolymer modified epoxy resin composition of the present invention can be produced by mixing all the components of the composition together in any order.

Alternatively, the curable resin composition of the present invention can be produced by preparing a first composition comprising the epoxy resin component and block copolymer component; and a second composition comprising the curing agent component. All other components useful in making the resin composition may be present in the same composition, or some may be present in the first composition, and some in the second composition. The first composition is then mixed with the second composition to form the curable resin composition. The curable resin composition mixture is then cured to produce an epoxy resin thermoset material.

Optionally, a neutral solvent may be employed in the blend to facilitate homogeneous mixing of the block copolymer, epoxy resin, and curing agent. The preferred optional solvent used in the present invention may include, for example, acetone and methyl ethyl ketone (MEK). In addition, other solvent choices can also be used as long as the solvent dissolves all the components.

Time and temperature of the process of preparing the modified epoxy resin composition is not critical, but generally the components can be mixed at a temperature of from 10 °C to 60 °C, preferably from 20 °C to 60 °C and more preferably from 25 °C to 40 °C for a sufficient time period until complete homogeneity is achieved.

The mixture of epoxy resin, curing agent, block copolymer, and any other modifiers present in the composition of the present invention can be cured according to typical processes practiced by the industry. The temperature of curing can range generally from 10 ºC to 200 ºC. These processes include ambient temperature cure (for example, 20 ºC) to elevated temperature cures (for example, from 100 ºC to 200 ºC) using thermal, radiation or a combination of energy sources. As if generally known, the time of cure may range generally from seconds, for example, in the case of cationic photocure to several hours. The curable composition can be cured in one step or multiple steps or the curable composition can be post-cured using a different temperature or energy source after the initial cure cycle.

The curable epoxy resin composition containing the polyether block copolymers of the present invention can be used in a variety of applications such as for example, for preparing composites or laminates.

The following working examples are given to illustrate the present invention and should not be construed as limiting its scope. Unless otherwise indicated, all parts and percentages are by weight.

Some of the raw materials used in the Examples were as follows:
D.E.R.* 383 is an epoxy resin having an EEW of 180 and commercially available from The Dow Chemical Company.
D.E.R.* 560 is an epoxy resin having an EEW of 455 and commercially available from The Dow Chemical Company.
Durite^{™} SD 1731 is a phenol novolac used as a curing agent and commercially available from Borden Chemical.

### EXAMPLES 1-4 and COMPARATIVE EXAMPLE A

### Part A: Synthesis of PBO Homopolymer

Butylene oxide (BO) monomer was purified by exposing the BO monomer to CaH₂ and then exposing the BO monomer to dibutyl magnesium in a purification flask for 24 hours and then for an additional 2 hours, respectively, at room temperature (25ºC). The atmosphere in the flask was deoxygenated by three freeze-thaw cycles, and then the BO monomer was distilled into a pre-dried clean burette.

The polymerization reaction was processed in a dry 1 liter (L) reactor under an argon atmosphere. To the reactor was added 0.156 mL (0.002 mol) of a co-initiator, 2-methoxyethanol, which had been dissolved in 200 mL clean tetrahydrofuran (THF), using a gas-tight syringe. The resulting solution of 2-methoxyethanol and THF was titrated by potassium naphthalenide until a slight green color in the solution remained for 30 minutes. The solution was cloudy, since the initiator potassium 2-methoxyethanol is not soluble in THF.

The polymerization reaction was carried out by adding 220 grams (g) BO monomer to the solution; the green color of the solution disappeared and the solution becomes clear after an hour indicating that the polymerization was proceeding. The polymerization was allowed to proceed at 50°C for 72 hours. The polymerization reaction was terminated with acidic methanol.

The resulting polymer was concentrated and redissolved in chloroform, washed with distilled water to extract KCl salts, and then vacuum dried to remove residues such as residual naphthalene and other residual solvents. The resulting PBO homopolymer was a colorless pourable liquid polymer. Analysis by gel permeation chromatography (GPC) showed the molecular weight of the final polybutylene oxide (PBO) homopolymer was Mn=21,000 g/mol with a BO monomer conversion of 50 percent.

### Part B(1): Synthesis of PBO-PEO Diblock Copolymer from PBO Homopolymer

PBO (10.87 g, 21,000 g/mol), prepared in Part A above, was dissolved in 300 mL THF. The resulting solution was titrated with potassium naphthalenide until a steady light color in the solution appeared. After 30 minutes, 3.47 g of ethylene oxide (EO) monomer was added to the solution. The polymerization reaction between the EO and the PBO proceeded for 12 hours. The polymerization reaction was terminated with methanolic HCl. GPC results showed the molecular weight of the resulting fully purified diblock copolymer was Mn=28,300 g/mol.

### PART B(2): Synthesis of PEO-PBO Diblock Copolymer From PEO Homopolymer

A polyether diblock copolymer was prepared from a preformed polyethyleneglycol monomethyl ether which was dissolved in toluene and dried, then deprotonated with potassium naphthalenide and used to initiate butylene oxide polymerization.

A representative synthesis of the PEO-PBO diblock copolymer was performed in a 250 mL round bottom flask equipped with a magnetic Teflon coated stir bar and a septum port with septum. The flask was dried in a forced air oven at 115°C and allowed to cool under a stream of dry nitrogen. To the flask was then added 15 g of polyethylene glycol monomethyl ether (MPEG, Mₙ=2,000, Aldrich Chemical) and the flask was equipped with a Dean-Stark trap and a reflux condenser. 100 mL dry toluene (Fisher Scientific, dried by passing over activated alumina) was added to the flask, and under nitrogen the flask was heated to 125°C to remove toluene/water azeotrope. After 50 mL of distillate was removed, another 100 mL toluene was added to the flask and another 105 mL distillate was removed.

Potassium napthalenide was prepared in a 100 mL round bottom flask equipped with a glass stir bar and a septum port with septum, which was dried in a forced air oven and allowed to cool under a stream of dry nitrogen. This dried flask was placed in a glove bag filled with nitrogen, and 0.5 g potassium metal (Aldrich Chemical, A.W. 39.10, 12.8 mmole ) was added to the flask along with 1.9 g naphthalene (Aldrich Chemical, F.W. 128.17, 14.8 mmole) and 50 mL dry THF (Aldrich Chemical, passed over alumina prior to use. The mixture in the flask was stirred under nitrogen overnight, turning dark green.

A 1 mL sample of mixture was removed from the flask and titrated to a phenolphthalein end point with 2.3 mL of a 0.1 N HCl solution (concentration 0.23 N).

29 mL of the potassium naphthalenide solution was added to the MPEG toluene solution at 40°C, the green color disappearing as it entered the solution (6.7 moles K added to 7.5 moles of OH chain end). 65.4 g butylene oxide (1,2-epoxybutane, Aldrich Chemical 99 percent, distilled away from CaH₂ under nitrogen) was then added to the flask by cannula, and the mixture was heated to 65°C. The resulting polymerization reaction was allowed to proceed for 68 hours, after which the heat was removed and the reaction was neutralized with 100 mL methanol containing 2 mL concentrated HCl. The solvents were removed from the resulting polymer by rotary evaporation. The resulting PEO-PBO polymer had a molecular weight of Mn=11,350 g/mol measured by GPC with comparison to a polystyrene standard, and was 20 percent polyethylene oxide by weight as determined by ¹H NMR analysis.

### PART B(3): Synthesis of PBO-PEO Diblock Copolymer By Direct Block Copolymerization

The synthesis of polyethylene oxide-*b*-polybutylene oxide copolymer was performed in a 5 gallon reactor. A catalyzed initiator was prepared by reacting diethylene glycol monomethyl ether with potassium hydroxide at 120°C, and removing the water in vacuo (down to 200 ppm by Karl Fisher titration).

Catalyzed initiator (123.9 grams; approximately one mole of diethylene glycol monomethyl ether) prepared above was heated to 120 °C. Butylene oxide (5355 grams; 74.38 moles) was slowly fed into the reactor such that the reaction temperature was maintained at 120 °C. After addition was complete the mixture was digested until the pressure in the reactor no longer decreased. A portion of the reaction mixture was removed leaving 3052 grams of product in the reactor. More butylene oxide (1585 grams; 22.01 moles) was slowly added at a rate which maintained the reaction temperature at 120 °C. When addition was complete the mixture was again digested until the pressure leveled off.

Ethylene oxide (1830 grams; 41.59) was slowly added to the butylene oxide block polymer (4016 grams) prepared in above such that the reaction temperature was maintained at 120 °C. When addition was complete the mixture was digested until the pressure leveled off. Enough glacial acetic acid was then added to the mixture to bring the pH of the mixture to 6-7 (ASTM E70-90). The product was then transferred via a transfer line to a storage container while maintaining the product temperature above 50 °C to prevent solidification of the product in the transfer line. The final product, PEO-PBO block copolymer, had a number average molecular weight of 5397 as determined by titration of the polymer OH end groups (ASTM D 4274-94, Method D).

### Part D: Casting of Block Copolymer-Modified Epoxy Resin

A part containing PBO-PEO, D.E.R.* 383 epoxy resin, and Durite SD 1731 curing agent, using acetone as a solvent is prepared as follows:
Step 1. The PBO-PEO diblock copolymer (2 g) prepared in Part B(2) above and acetone (23 mL) were stirred together. After the diblock copolymer was completely dissolved in the acetone, Durite SD 1731 phenol novolac (14 g) and D.E.R.* 383 epoxy resin (24 g) were added to the acetone/PBO-PEO diblock solution. The resulting solution was stirred until the solution became homogeneous.
Step 2. The solution was vacuum dried to remove the acetone solvent present in the solution. The solution was vacuum dried by heating the solution at 50°C for 30 minutes, then 75°C for 2 hours, and then at 100°C for 30 minutes.
Step 3. The mixture was poured hot (145°C) into the pre-heated mold (150°C), the interior surface of the mold which was treated with a dry tetrafluoroethylene release spray coating immediately prior to use. The epoxy resin was cured at 150°C for at least 12 hours. The resulting modified epoxy plaque was demolded after the oven had cooled to room temperature, and the epoxy plague was post cured at 220°C for 2 hours under vacuum. Parts for testing were obtained by machining parts from the epoxy plaque.

Parts were tested in accordance with the method of ASTM D-5045 to determine the fracture toughness, or critical stress intensity factor (K_{1c}) and Young's modulus, from which the strain energy release rate (G_{c}) was calculated. The experiments were conducted using an Instron Testing System Model 1101.

Table 1 provides mechanical property data for some modified epoxies with various EO-BO block copolymer modifiers.

**TABLE 1 Mechanical Properties of the PBO-PEO -Modified D.E.R.* 383 and D.E.R.* 560 Epoxy**

| Resin Composition | Example 1 | Example 2 | Example 3 | Example 4 | Comparative Example A |
|---|---|---|---|---|---|
| **Components** | | | | | |
| Epoxy | D.E.R.* 383 | D.E.R.* 383 | D.E.R.* 383 | D.E.R.*38 3 : D.E.R.* 560 (1:1) | D.E.R.* 383 |
| Diblock Copolymer Modifier | EO₁₁₃BO₈₀ | EO₁₁₃BO₉₁ | EO₁₁₃BO₁₀₈ | EO₁₁₃BO₉₁ | none |
| EO volume fraction | 0.45 | 0.42 | 0.38 | 0.42 | -- |

| **Properties** | | | | | |
|---|---|---|---|---|---|
| Young's modulus (Pa×10⁻⁹) | 2.24 | 2.65 | 2.26 | 3.07 | 2.5 |
| K_{1c} (MPa/m^{½}) | 0.9407 | 1.063 | 1.1075 | 1.0768 | 0.52 |
| G_{c} (J/m²) | 305 | 380 | 527 | 335 | 81.2 |

### EXAMPLE 5

In this Example 5, a casting of block copolymer/homopolymer modified epoxy resin was prepared.

A part containing a D.E.R.* 383 epoxy resin, Durite SD-1731 curing agent, a PEO-PBO diblock copolymer, 2-ethyl-4-methylimidazole catalyst, and polybutylene oxide was prepared using THF as a dispersing solvent.

77.5 g of D.E.R.* 383 and 45.4 g of Durite SD-1731 were weighed into a 500 mL round bottom flask equipped with a Teflon stir bar. 60 mL of THF were added to the flask to dissolve the D.E.R.* 383 and Durite SD-1731. Then 6.1 g of a PEO-PBO diblock copolymer (Mn=5400 g/mol, 34 weight percent PEO) prepared in Part B(3) above and 2.5 g of polybutylene oxide (Mn=1900) were first dissolved in THF and then the resulting solution was added to the epoxy/curing agent solution.

The resulting monomer mixture was degassed at 83 °C for 5-6 hours to remove residual solvent. 1.26 g of 2-ethyl-4-methylimidazole catalyst was then added to the mixture. The resulting monomer mixture was then poured into a heated (100 °C) mold, which was then placed in a nitrogen purged oven and heated through the cure cycle (one hour at 100 °C, 1 hour at 125 °C, and 2 hours at 150 °C). The mold was prepared from polished stainless steel plates separated by a silicone rubber gasket and held together with C-clamps. The interior surface of the mold was treated with Freekote 44-NC (Loctite) mold release to prevent the resulting casting from adhering to the mold.

Polymer clear casts made by the process above were approximately 5 inches (12.7 centimeters) x 6 inches (15.2 centimeters) x 1/8 inch (0.32 centimeters) in dimension. The fully cured cast had a glass transition temperature of 148.5 °C as measured by dynamic mechanical analysis and a critical stress intensity factor (K_{1c}) of 1.85 MPa/m^{1/2}.

### EXAMPLES 6-8 and COMPARATIVE EXAMPLE A

The block copolymers in Examples 6 and 7 were made using procedures of Part A and Part B(1) of Example 1 above except that a hexylene oxide (HO) monomer was used in place of butylene oxide (BO) monomer. Example 8 is a blend of a two separate PHO-PEO diblock copolymers. Comparative Example A is a non-modified epoxy resin (DER-383). The mechanical properties of these examples are shown in Table 2 below. Example 8 shows how blending two block copolymers can be used to control morphology and final property performance relative to the individual block copolymers as shown in Examples 6 and 7.

**TABLE 2 Mechanical Properties of the PHO-PEO -Modified D.E.R.* 383**

| Resin Composition | Example 6 | Example 7 | Example 8 | Comparative Example A |
|---|---|---|---|---|
| **Components** | | | | |
| Epoxy | D.E.R.* 383 | D.E.R.* 383 | D.E.R.* 383 | D.E.R.* 383 |
| Diblock Copolymer Modifier | EO₆HO₂₇ | EO₃₆HO₉₁ | 20 wt percent EO₆HO₂₇ 80 wt percent EO₃₆HO₉₁ | none |
| EO volume fraction | 0.11 | 0.41 | -- | -- |
| Total weight percent of block copolymer in the cured epoxy | 5 | 5 | 5 | 0 |

| **Properties** | | | | |
|---|---|---|---|---|
| Micelle Morphology | Vesicle | Sphere | Worm-like | -- |
| K_{1c} (MPa/m^{½}) | 1.26 | 0.61 | 2.16 | 0.52 |
| G_{c} (J/m²) | 920 | 160 | 1830 | 81.2 |

### EXAMPLES 9-13 and COMPARATIVE EXAMPLE A

In Examples 9-13 block copolymer micelle size was modified through the addition of a PHO homopolymer and the performance of the modified block copolymer was measured. The PHO homopolymer used in Examples 10-13 was prepared by method Part A of Example 1 and had a Mn of 2,000 g/mol. The PHO-PEO block copolymer of Examples 9-13 was prepared using method Part B(1) of Example 1 starting from the PHO homopolymer (Mn = 2000 g/mol). The PHO-PEO block copolymer contained 30 weight percent ethylene oxide. The mechanical property results of PHO-PEO block copolymer blended with a PHO homopolymer examples are shown in Table 3 below.

**TABLE 3 Mechanical Properties of the PHO-PEO/PHO Homopolymer -Modified D.E.R.* 383**

| Resin Composition | Example 9 | Example 10 | Example 11 | Example 12 | Example 13 | Comparative Example A |
|---|---|---|---|---|---|---|
| **Components** | | | | | | |
| Epoxy | D.E.R.* 383 | D.E.R.* 383 | D.E.R.* 383 | D.E.R.* 383 | D.E.R.* 383 | D.E.R.* 383 |
| PHO to PHO-PEO weight ratio | 0 | 1 | 2 | 30 | 300 | none |
| Weight percent of combined PHO and PHO-PEO polymers in plaque | 5 | 5 | 5 | 5 | 5 | -- |

| **Properties** | | | | | | |
|---|---|---|---|---|---|---|
| Spherical Micelle diameter | 23-30 nm | 30-50 nm | 0.1-1 µm | 0.5-3 µm | 0.5-10 µm | -- |
| G_{c} (J/m²) | 1160 | 1300 | 1420 | 777 | 444 | 81.2 |

## Claims

1. A curable epoxy resin composition comprising
(a) an epoxy resin; and
(b) an amphiphilic block copolymer containing at least one epoxy resin miscible block segment and at least one epoxy resin immiscible block segment; wherein the immiscible block segment comprises at least one polyether structure provided that the polyether structure of said immiscible block segment contains at least one or more alkylene oxide monomer units having at least four carbon atoms; such that when the epoxy resin composition is cured, the toughness of the resulting cured epoxy resin composition is increased.

2. The composition of Claim 1 wherein the amphiphilic block copolymer is an amphiphilic polyether block copolymer containing at least one epoxy resin miscible block segment and at least one epoxy resin immiscible block segment; wherein the miscible block segment comprises at least one polyether structure.

3. The composition of Claim 2 wherein the amphiphilic polyether block copolymer is selected from the group consisting of a diblock, a linear triblock, a linear tetrablock, a higher order multiblock structure; a branched block structure; or a star block structure.

4. The composition of Claim 1 wherein the miscible block segment contains a polyethylene oxide block, a polypropylene oxide block, or a poly(ethylene oxide-co-propylene oxide) block; and the immiscible block segment contains a polybutylene oxide block, a polyhexylene oxide block, a polydodecylene oxide block, or a polyhexadecylene oxide block.

5. The composition of Claim 1 wherein the at least one of the miscible segments of the amphiphilic block copolymer is a poly(ethylene oxide); and the at least one of the immiscible segments of the amphiphilic block copolymer is a poly(butylene oxide).

6. The composition of Claim 1 wherein the amphiphilic block copolymer is poly(ethylene oxide)-b-poly(butylene oxide) or poly(ethylene oxide)-b-poly(butylene oxide)-b-poly(ethylene oxide).

7. The composition of Claim 1 wherein the amphiphilic block copolymer is poly(ethylene oxide)-b-poly (hexylene oxide).

8. The composition of Claim 1 wherein the amphiphilic block copolymer is a blend of two or more block copolymers.

9. The composition of Claim 1 wherein the amphiphilic block copolymer has a molecular weight of from 1000 to 30,000.

10. The composition of Claim 1 wherein the ratio of the miscible segments of the amphiphilic block copolymer to the immiscible segments of the amphiphilic block copolymer is from 10:1 to 1:10.

11. The composition of Claim 1 wherein the amphiphilic block copolymer is present in an amount of from 0.1 weight percent to 50 weight percent based on the weight of the composition.

12. The composition of Claim 1 wherein the epoxy resin is selected from the group consisting of polyglycidyl ethers of polyhydric alcohols, polyglycidyl ethers of polyhydric phenols, polyglycidyl amines, polyglycidyl amides, polyglycidyl imides, polyglycidyl hydantoins, polyglycidyl thioethers, epoxidized fatty acids or drying oils, epoxidized polyolefins, epoxidized di-unsaturated acid esters, epoxidized unsaturated polyesters, and mixtures thereof.

13. The composition of Claim 1 wherein the epoxy resin is a glycidyl polyether of a polyhydric alcohol or a glycidyl polyether of a polyhydric phenol.

14. The composition of Claim 1 wherein the epoxy resin is selected from the group consisting of 3,4-epoxycyclohexylmethyl-3,4-epoxycyclohexyl carboxylate; 1,2-epoxy-4-vinylcyclohexane; bis(7-oxabicyclo[4.1.0]hept-3-ylmethyl) hexanedioic acid ester; 3,4-epoxycyclohexanecarboxylate methyl ester; and mixtures thereof..

15. The composition of Claim 1 including a homopolymer.

16. The composition of Claim 15 wherein the weight ratio of homopolymer to block copolymer is from 0.1 to 300.

17. A composition of Claim 1 including a homopolymer of identical composition to the epoxy immiscible block segment.

18. A composition of Claim 1 including a homopolymer of identical composition to the epoxy miscible block segment.

19. A composition of Claim 1 including a polymer that is miscible in the epoxy immiscible block and thus changes the morphology of the immiscible block in the thermoset network.

20. A composition of Claim 1 including a polymer that is capable of changing the size of the micelles of the block copolymer.

21. The composition of Claim 1 wherein the epoxy has an epoxide equivalent weight of from 150 to 3000.

22. The composition of Claim 1 including a curing catalyst.

23. The composition of Claim 1 including a curing agent.

24. The composition of Claim 1 including a photo initiator compound.

25. The composition of Claim 1 including a pigment.

26. A process for preparing a curable epoxy resin composition comprising mixing
(a) an epoxy resin; and
(b) an amphiphilic block copolymer containing at least one epoxy resin miscible block segment and at least one epoxy resin immiscible block segment; wherein the immiscible block segment comprises at least one polyether structure provided that the polyether structure of said immiscible block segment contains at least one or more alkylene oxide monomer units having at least four carbon atoms; such that when the epoxy resin composition is cured, the toughness of the resulting cured epoxy resin composition is increased.

27. A composite comprising the composition of Claim 1.

28. A laminate comprising the composition of Claim 1.

## Patentansprüche

1. Härtbare Epoxidharzzusammensetzung, die Folgendes umfasst:
(a) ein Epoxidharz; und
(b) ein amphiphiles Blockcopolymer, das mindestens ein mit Epoxidharz mischbares Blocksegment und mindestens ein mit Epoxidharz nicht mischbares Blocksegment enthält; wobei das nicht mischbare Blocksegment mindestens eine Polyetherstruktur umfasst, vorausgesetzt die Polyetherstruktur des nicht mischbaren Blocksegments enthält mindestens eine oder mehrere monomere Alkylenoxideinheiten mit mindestens vier Kohlenstoffatomen, so dass beim Härten der Epoxidharzzusammensetzung die Zähigkeit der resultierenden gehärteten Epoxidharzzusammensetzung erhöht wird.

2. Zusammensetzung nach Anspruch 1, wobei das amphiphile Blockcopolymer ein amphiphiles Polyetherblockcopolymer ist, das mindestens ein mit Epoxidharz mischbares Blocksegment und mindestens ein mit Epoxidharz nicht mischbares Blocksegment enthält; wobei das mischbare Blocksegment mindestens eine Polyetherstruktur umfasst.

3. Zusammensetzung nach Anspruch 2, wobei das amphiphile Polyetherblockcopolymer aus der aus einer Diblock-, einer linearen Triblock-, einer linearen Tetrablock- sowie einer Mehrblockstruktur höherer Ordnung; einer verzweigten Blockstruktur; oder einer Sternblockstruktur bestehenden Gruppe ausgewählt ist.

4. Zusammensetzung nach Anspruch 1, wobei das mischbare Blocksegment einen Polyethylenoxidblock, einen Polypropylenoxidblock oder einen Poly(ethylenoxid-Co-propylenoxid)-Block enthält; und das nicht mischbare Blocksegment einen Polybutylenoxidblock, einen Polyhexylenoxidblock, einen Polydodecylenoxidblock oder einen Polyhexadecylenoxidblock enthält.

5. Zusammensetzung nach Anspruch 1, wobei das mindestens eine der mischbaren Segmente des amphiphilen Blockcopolymers ein Poly(ethylenoxid) ist; und das mindestens eine der nicht mischbaren Segmente des amphiphilen Blockcopolymers ein Poly(butylenoxid) ist.

6. Zusammensetzung nach Anspruch 1, wobei das amphiphile Blockcopolymer Poly(ethylenoxid)-b-Poly(butylenoxid) oder Poly(ethylenoxid)-b-Poly(butylenoxid)-b-Poly(ethylenoxid) ist.

7. Zusammensetzung nach Anspruch 1, wobei das amphiphile Blockcopolymer Poly(ethylenoxid)-b-Poly(hexylenoxid) ist.

8. Zusammensetzung nach Anspruch 1, wobei das amphiphile Blockcopolymer eine Mischung von zwei oder mehr Blockcopolymeren ist.

9. Zusammensetzung nach Anspruch 1, wobei das amphiphile Blockcopolymer ein Molekulargewicht von 1000 bis 30.000 hat.

10. Zusammensetzung nach Anspruch 1, wobei das Verhältnis der mischbaren Segmente des amphiphilen Blockcopolymers zu den nicht mischbaren Segmenten des amphiphilen Blockcopolymers von 10:1 bis 1:10 beträgt.

11. Zusammensetzung nach Anspruch 1, wobei das amphiphile Blockcopolymer in einer Menge von 0,1 Gew.-% bis 50 Gew.-% vorliegt, bezogen auf das Gewicht der Zusammensetzung.

12. Zusammensetzung nach Anspruch 1, wobei das Epoxidharz aus der aus Polyglycidylethern von mehrwertigen Alkoholen, Polyglycidylethern von mehrwertigen Phenolen, Polyglycidylaminen, Polyglycidylamiden, Polyglycidylimiden, Polyglycidylhydantoinen, Polyglycidylthioethern, epoxidierten Fettsäuren oder Trockenölen, epoxidierten Polyolefinen, epoxidierten zweifach ungesättigten Säureestern, epoxidierten ungesättigten Polyestern und Mischungen davon bestehenden Gruppe ausgewählt ist.

13. Zusammensetzung nach Anspruch 1, wobei das Epoxidharz ein Glycidylpolyether eines mehrwertigen Alkohols oder ein Glycidylpolyether eines mehrwertigen Phenols ist.

14. Zusammensetzung nach Anspruch 1, wobei das Epoxidharz aus der aus 3,4-Epoxycyclohexylmethyl-3,4-epoxycyclohexylcarboxylat; 1,2-Epoxy-4-vinylcyclohexan; Bis(7-oxabicyclo[4.1.0]hept-3-ylmethyl)hexandisäureester; 3,4-Epoxycyclohexancarboxylatmethylester; und Mischungen davon bestehenden Gruppe ausgewählt ist.

15. Zusammensetzung nach Anspruch 1 mit einem Homopolymer.

16. Zusammensetzung nach Anspruch 15, wobei das Gewichtsverhältnis von Homopolymer zu Blockcopolymer von 0,1 bis 300 beträgt.

17. Zusammensetzung nach Anspruch 1, die ein Homopolymer von identischer Zusammensetzung wie das mit Epoxidharz nicht mischbare Blocksegment umfasst.

18. Zusammensetzung nach Anspruch 1, die ein Homopolymer von identischer Zusammensetzung wie das mit Epoxidharz mischbare Blocksegment umfasst.

19. Zusammensetzung nach Anspruch 1 mit einem Polymer, das in den mit Epoxidharz nicht mischbaren Block mischbar ist und somit die Morphologie des nicht mischbaren Blocks in dem hitzehärtbaren Netzwerk ändert.

20. Zusammensetzung nach Anspruch 1 mit einem Polymer, das die Größe der Mizellen des Blockcopolymers ändern kann.

21. Zusammensetzung nach Anspruch 1, wobei das Epoxidharz ein Epoxidäquivalentgewicht von 150 bis 3000 hat.

22. Zusammensetzung nach Anspruch 1 mit einem Härtungskatalysator.

23. Zusammensetzung nach Anspruch 1 mit einem Härtungsmittel.

24. Zusammensetzung nach Anspruch 1 mit einer Photoinitiatorverbindung.

25. Zusammensetzung nach Anspruch 1 mit einem Pigment.

26. Verfahren zur Herstellung eines härtbaren Epoxidharzzusammensetzung, bei dem Folgendes gemischt wird:
(a) ein Epoxidharz; und
(b) ein amphiphiles Blockcopolymer, das mindestens ein mit Epoxidharz mischbares Blocksegment und mindestens ein mit Epoxidharz nicht mischbares Blocksegment enthält; wobei das nicht mischbare Blocksegment mindestens eine Polyetherstruktur umfasst, vorausgesetzt die Polyetherstruktur des nicht mischbaren Blocksegments enthält mindestens eine oder mehrere monomere Alkylenoxideinheiten mit mindestens vier Kohlenstoffatomen; so dass beim Härten der Epoxidharzzusammensetzung die Zähigkeit der resultierenden gehärteten Epoxidharzzusammensetzung erhöht wird.

27. Verbundstoff, der die Zusammensetzung nach Anspruch 1 umfasst.

28. Laminat, das die Zusammensetzung nach Anspruch 1 umfasst.

## Revendications

1. Composition de résine époxyde durcissable, comprenant :
a) une résine époxyde ;
b) et un copolymère à blocs amphiphile, comportant au moins un segment bloc miscible à la résine époxyde et au moins un segment bloc non miscible à la résine époxyde, lequel segment bloc non miscible comporte au moins une structure de type polyéther, étant entendu que la structure de type polyéther dudit segment bloc non miscible comporte au moins un ou plusieurs motif(s) monomère(s) de type oxyde d'alkylène comportant au moins quatre atomes de carbone, de sorte que, après durcissement de la composition de résine époxyde, la ténacité de la composition de résine époxyde durcie résultante est augmentée.

2. Composition conforme à la revendication 1, dans laquelle le copolymère à blocs amphiphile est un copolymère polyéther amphiphile à blocs qui comporte au moins un segment bloc non miscible à la résine époxyde et au moins un segment bloc miscible à la résine époxyde, lequel segment bloc miscible comporte au moins une structure de type polyéther.

3. Composition conforme à la revendication 2, dans laquelle le copolymère polyéther amphiphile à blocs est choisi dans l'ensemble formé par ceux qui présentent une structure en deux blocs, une structure en trois blocs linéaire, une structure en quatre blocs linéaire, une structure en blocs en nombre plus élevé, une structure en blocs ramifiée ou une structure en blocs étoilée.

4. Composition conforme à la revendication 1, dans laquelle le segment bloc miscible contient un bloc poly(oxyéthylène), un bloc poly(oxypropylène), ou un bloc poly(oxyéthylène-co-oxypropylène), et le segment bloc non miscible contient un bloc poly(oxybutylène), un bloc poly(oxyhexylène), un bloc poly(oxydodécylène), ou un bloc poly(oxyhexadécylène).

5. Composition conforme à la revendication 1, dans laquelle le segment miscible ou au moins l'un des segments miscibles du copolymère à blocs amphiphile est un poly(oxyéthylène), et le segment non miscible ou au moins l'un des segments non miscibles du copolymère à blocs amphiphile est un poly(oxybutylène).

6. Composition conforme à la revendication 1, dans laquelle le copolymère à blocs amphiphile est un poly(oxyéthylène)-b-poly(oxybutylène) ou un poly(oxyéthylène)-b-poly(oxybutylène)-b-poly(oxyéthylène).

7. Composition conforme à la revendication 1, dans laquelle le copolymère à blocs amphiphile est un poly(oxyéthylène)-b-poly(oxyhexylène).

8. Composition conforme à la revendication 1, dans laquelle le copolymère à blocs amphiphile est un mélange de deux copolymères à blocs ou plus.

9. Composition conforme à la revendication 1, dans laquelle le copolymère à blocs amphiphile présente une masse moléculaire de 1 000 à 30 000.

10. Composition conforme à la revendication 1, dans laquelle le rapport des segments miscibles du copolymère à blocs amphiphile aux segments non miscibles du copolymère à blocs amphiphile vaut de 10/1 à 1/10.

11. Composition conforme à la revendication 1, dans laquelle le copolymère à blocs amphiphile se trouve en une quantité représentant de 0,1 à 50 % du poids de la composition.

12. Composition conforme à la revendication 1, dans laquelle la résine époxyde est choisie dans l'ensemble constitué par les composés suivants : éthers polyglycidyliques de polyols, éthers polyglycidyliques de polyphénols, amines polyglycidyliques, amides polyglycidyliques, imides polyglycidyliques, hydantoïnes polyglycidyliques, thioéthers polyglycidyliques, acides gras ou huiles siccatives époxydé(e)s, polyoléfines époxydées, esters d'acides di-insaturés époxydés, et polyesters insaturés époxydés, ainsi que les mélanges de tels composés.

13. Composition conforme à la revendication 1, dans laquelle la résine époxyde est un polyéther polyglycidylique de polyol ou un polyéther polyglycidylique de polyphénol.

14. Composition conforme à la revendication 1, dans laquelle la résine époxyde est choisie parmi les suivantes : 3,4-époxy-cyclohexane-carboxylate de 3,4-époxy-cyclohexyl-méthyle, 1,2-époxy-4-vinyl-cyclohexane, hexane-dioate de bis(7-oxa-bicyclo[4.1.0]hept-3-yl-méthyle), et 3,4-époxy-cyclohexane-carboxylate de méthyle, ainsi que leurs mélanges.

15. Composition conforme à la revendication 1, qui contient un homopolymère.

16. Composition conforme à la revendication 15, dans laquelle le rapport pondéral de l'homopolymère au copolymère à blocs vaut de 0,1 à 300.

17. Composition conforme à la revendication 1, qui contient un homopolymère de constitution identique à celle du segment bloc non miscible à la résine époxyde.

18. Composition conforme à la revendication 1, qui contient un homopolymère de constitution identique à celle du segment bloc miscible à la résine époxyde.

19. Composition conforme à la revendication 1, qui contient un polymère qui est miscible au bloc non miscible à la résine époxyde et par là modifie la morphologie prise par le bloc non miscible au sein du réseau thermodurci.

20. Composition conforme à la revendication 1, qui contient un polymère qui est capable de modifier la taille des micelles du copolymère à blocs.

21. Composition conforme à la revendication 1, dans laquelle la résine époxyde présente un poids d'équivalent époxyde de 150 à 3000.

22. Composition conforme à la revendication 1, qui contient un catalyseur de durcissement.

23. Composition conforme à la revendication 1, qui contient un agent durcisseur.

24. Composition conforme à la revendication 1, qui contient un composé photo-amorceur.

25. Composition conforme à la revendication 1, qui contient un pigment.

26. Procédé de préparation d'une composition de résine époxyde durcissable, comportant le fait de mélanger :
a) une résine époxyde ;
b) et un copolymère à blocs amphiphile, comportant au moins un segment bloc miscible à la résine époxyde et au moins un segment bloc non miscible à la résine époxyde, lequel segment bloc non miscible contient au moins une structure de type polyéther, étant entendu que la structure de type polyéther dudit segment bloc non miscible comporte au moins un ou plusieurs motif(s) monomère(s) de type oxyde d'alkylène comportant au moins quatre atomes de carbone, de sorte que, après durcissement de la composition de résine époxyde, la ténacité de la composition de résine époxyde durcie résultante est augmentée.

27. Composite comprenant une composition conforme à la revendication 1.

28. Stratifié comprenant une composition conforme à la revendication 1.
